# EUROPEAN PATENT APPLICATION

(11) **EP 4 202 767 A1**
(43) Date of publication of application: **28.06.2023**
(21) Application number: 21290096.3
(22) Date of filing: 22.12.2021
(51) Int. Cl.: G06N 3/04, G06N 3/063, G06F 9/50

(54) **NEURON CORE SYNCHRONIZATION**

(71) Applicant: GrAl Matter Labs S.A.S., 75012 Paris (FR)
(72) Inventor: Pires Dos Reis Moreira, Orlando Miguel, 5656 AG Eindhoven (NL); Bamberg, Lennart, 5656 AG Eindhoven (NL)
(74) Representative: V.O.

(57) **Abstract**

An event-based neural network processor (1) is provided comprising neural network processor facilities including data processing facilities, data storage facilities and message exchange facilities. The processor (1) is configured to execute a neural network with neural network elements logically organized in neural network layers. The neural network layers include at least a source neural network layer and a current neural network layer. The source neural network layer comprises a plurality of source batches. Each source batch is a respective subset of neural network elements in the source neural network layer. The current neural network layer comprising a plurality of current batches. Each current batch is a respective subset of neural network elements in the current neural network layer. A current batch of the current neural network layer (10C) is associated with respective one or more source batches of the source neural network layer (10S) in that one or more neural network elements of the current batch are configured to receive messages from one or more neural network elements in each of the one or more source batches of the source neural network layer. The event-based neural network processor (1) at least has a temporary storage space (30C) that is dynamically allocated to a number of current batches, which number is greater than one and less than the plurality of current batches in the current neural network layer. The temporary storage space is dynamically assigned to two or more current batches. The improved processor and method provide for a reduction of memory requirements.

## Description

### BACKGROUND

The present application pertains to an event-based neural network processor.

The present application further pertains to an event-based neural network processing method.

A neural network processor is designed to perform computations in a manner analogous to the operation of neurons in a brain. The neural network processor mimics neurons as neural network elements that are interconnected by a message transmission network. A neural network element having reached an excited state transmits an output message to the neural network elements with which it is connected, analogous to the way in which a biological neuron transmits a spike via its axons to the synapses of receiving biological neurons. In practice, respective sets of neural network elements share respective computation and control modules responsible for performing the computational and logic operations required by the neural network elements. A neural network element is an element of the neural network processor that functions logically as a processor element having a modelled neural behavior. A neural network element however does not need to have its own data processing and logic functional capacities to perform this behavior. Typically a cluster of neural network elements shares common facilities, such as data processing and logic functional facilities of a processor core and message exchange facilities of a processor core. The modelled neural behavior includes the capability of a neural network element with the shared common facilities to conditionally transmit output messages depending on its neuron state and to update its neuron state in response to input messages. The logical organization of the neural network processor is determined by the configured interconnectivity of its elements. The interconnectivity of a neural network element is determined by the set of neural network elements from which it is configured to receive input messages and the set of neural network elements to which it can send output messages.

A neural network processor is typically organized logically as a plurality of neural network clusters such as neural network layers, wherein each neural network layer comprises a plurality of neural network elements. Neural network elements organized in a neural network layer are configured to receive input messages from a logically preceding neural network layer and/or are configured to submit output messages to a logically succeeding neural network layer. Neural network elements organized in a neural network layer usually perform a same operation, for example a convolution operation or a pooling operation. The respective neuron states of the plurality of neural network elements of a neural network layer together define one or more feature maps. A feature map can be considered as a map of feature values of a feature (channel) in a space. For example a 2D RGB image may be considered as a set of three feature maps, the feature values being the colors R,G, B respectively. In the more general case, the feature map is a map of m feature values in an n-dimensional space. Each set of neural network elements associated with a processor core may correspond to a single respective set of neural network elements of a neural network layer, but that is not necessary. In some cases a set of neural network elements associated with a processor core comprises respective sets of neural network elements of respective ones of neural network layers. In other cases the set of neural network elements of a single neural network layer is partitioned over respective processor cores.

A biological neural network is input-centric in the sense that a neuron is responsive to input received as spikes from firing neurons. This causes the receiving neuron to change its action potential and if the action potential exceeds a threshold value it issues a spike that causes connected neurons to change their neuron state in turn, which may result in subsequent spikes. Likewise, in an event-based neural network a neural network element is responsive to event messages received at its input. The event messages are processed by the shared respective computation and control module, for example a processor core to update the neuron state of the receiving neural network element. Once the updated neuron state reaches a threshold value, the shared respective computation and control module issues an event message on behalf of the receiving neural network element and resets the neuron state to a reference value. The event messages are transmitted via a message transmission network.

In a neural network processor, each neural network element is typically stateful. This means that a neuron state (often referred to as a neuron's action potential) is stored persistently for each neural network element. Upon receipt of an event message from a transmitting neural network element the responsible computation module accordingly modifies the neuron state of the receiving neural network element. By way of example, it multiplies the value of the received event message by a weight ascribed by the receiving neural network element to the transmitting neural network element, and it adds the multiplication result to the internal state of the receiving neural network element. Then, typically, the responsible computation module will check whether an activation condition is met, that is, whether the new internal state has sufficiently changed from its previous value to justify the emission of an output event. This condition could be as simple as checking whether the variation in the value of the internal state between old and new exceeds a certain threshold.

One of the main limitations of neural network processors is that all the internal states of all the neural network elements in the network must be stored in memory. This severely increases the amount of storage necessary and severely restricts application mapping options.

Another observation is that event-based neural network processors can react to and propagate change very quickly. This, however, comes at a potentially high cost, since, if the activation condition is too sensitive - which may be required due to accuracy requirements - the system can end up sending many event messages, which in turn could cause many event messages in the subsequent layer and so on, resulting in an avalanche of event messages, which imposes a heavy burden on the message exchange facilities. This problem can be solved by employing hardware techniques such as a refractory mechanism as disclosed in PCT/EP2020/086846 filed by the same applicant. This means that, after a neural network element submits an event message, it has a cooldown period during which it silently processes its updates without emitting further event messages. But any refractory mechanism will require additional storage for intermediate results to be kept.

### SUMMARY

It is a first object of the present disclosure to provide an improved event based neural network processor having moderate memory requirements.

It is a second object of the present disclosure to provide an improved event based neural network processing method having moderate memory requirements.

In accordance with the first object the event-based neural network processor comprises neural network elements that are organized logically in neural network layers, that include a source neural network layer and a current neural network layer.

The source neural network layer comprises a plurality of source batches. Each source batch is a respective subset of neural network elements in the source neural network layer. The current neural network layer comprises a plurality of current batches. Analogously, each current batch is a respective subset of neural network elements in the current neural network layer. A current batch of the current neural network layer is associated with respective one or more source batches of the source neural network layer in that one or more neural network elements of the current batch are configured to receive messages from one or more neural network elements in each of said one or more source batches of the source neural network layer.

The event-based neural network processor at least has a temporary storage space to be dynamically allocated to a number of current batches. The capacity of the temporary storage space, i.e. the number of current batches that it can store at the same time is greater than one and less than the plurality of current batches in the current neural network layer.

It is noted that the logical organization of the event-based neural network processor may comprise any number of neural network layers in addition to the layers just mentioned.

Neuron state data of respective neural network elements defines a feature map of the neural network layer. In one embodiment the event-based neural network processor provides for a main storage space to store the neuron state data of a complete feature map. This is however not necessary, in another embodiment, only the temporary storage space is available for temporary storing the neuron state data of the batches having an allocated section therein.

It is noted that the logical definition of storage spaces does not restrict the physical implementation. For example a physical memory, such as a DRAM or SRAM may be partitioned in a plurality of main and/or temporary storage spaces. Alternatively a main storage space may have main storage space partitions in two or more physical memories.

As noted above, a feature map of a neural network layer is a map of m feature values in an n-dimensional space represented by the neuron states of the neural network elements configured logically in the neural network layer. In some embodiments a feature map of the current neural network is completely stored in a main storage space and in addition neuron state data of a limited number of current batches that are dynamically selected for being updated are stored in temporary storage space. These embodiments are denoted as "stateful". In other embodiments, denoted as "stateless", a main storage space is absent for the current neural network layer and only the temporary storage space is present for storing the neuron state data of a limited number of current batches, i.e. a number greater than one, but less than the total number of current batches in the current neural network layer. It is noted that the neural network layers may comprise any combination of stateful and stateless layers, or comprise only stateful layers or only stateless layers.

In this connection it is noted that a neural network layer may be partitioned in mapping units. Mapping units are sections of the neural network layer. Typically a mapping unit comprises a subset of the channels of the neural network layer. However, alternatively or additionally a mapping unit may be a section in the n-dimensional space wherein the feature map is represented. The partitioning in mapping units may be a partitioning of the neural network layer over the physical resources. For example each mapping unit is mapped to a respective core and the neuron state data of the mapping unit is stored in a memory facility of that core. The mapping units therewith form an intermediate partitioning of the neural network elements organized in a neural network layer, that can be further partitioned into batches for synchronization purposes. Accordingly, a batch of a neural network layer can be a batch within a mapping unit of a neural network layer. For the principles of the present invention it does not matter whether or not a neural network layer is intermediately partition into mapping units. For clarity this aspect is therefore not discussed in further detail.

A current batch of the current neural network layer is associated with respective one or more source batches of the source neural network layer in that one or more neural network elements of the current batch are configured to receive event messages from one or more neural network elements in each of said one or more source batches of the source neural network layer.

Likewise a current batch of the current neural network layer may be associated with respective one or more destination batches of the destination neural network layer in that one or more neural network elements in the current batch are configured to transmit event messages to one or more neural network elements in each of said one or more destination batches of the destination neural network layer.

The event-based neural network processor is configured to dynamically assign the temporary storage space of each neural network layer to two or more batches of neural network elements organized logically in said each neural network layer.

Furthermore, the event-based neural network processor is configured to perform the following operations for processing each current batch of neural network elements in the current neural network layer.

It is configured to receive event messages from the one or more associated source batches of the processed current batch. Using the temporary storage space of the current neural network layer it updates neuron state data of respective neural network elements in the processed current batch in response to the received event messages. The neural network processor then determines whether an emission condition for the processed batch is fulfilled and when this is the case it evaluates an activation function for each neural network element in the processed current batch. Subject to a function value resulting from said evaluation, it submits an event message to a destination associated with the neural network elements in the processed current batch for which the evaluation was performed.

Upon completion of the evaluation of the activation function for the neural network elements in the processed current batch, it releases the temporary storage space that was dynamically assigned to the processed current batch and it transmits an end of batch (EOB) notification message to each destination batch associated with the processed current batch.

The improved neural network processor only requires a modest amount of temporary storage space. I.e. only temporary neuron state data for a limited number of batches needs to be stored. Therewith it is possible to completely update the neuron states of the neural network elements for the batches being temporarily allocated a section in the temporary storage space before these neural network elements start an emission. Hence with a modest amount of temporary storage space, an avalanche of event-messages is avoided. According to one approach, denoted as "stateful", a neural network layer may have a respective main storage space, wherein the neuron state data of the layer is stored. In that case the evaluation of the activation function can be based on a comparison of the updated state of the neural network elements of a batch in the temporary storage space with the "old" neuron state as saved in the main storage space. Alternatively a main storage space may be absent for a neural network layer. In that case the computation of the neuron state of the neural network elements in a batch starts from scratch each cycle, and the evaluation of the activation function is based on the updated state of the neural network elements of the batch in the temporary storage space at the end of each cycle. In this alternative approach, denoted as "stateless", a very substantial reduction in memory requirements is achieved, which allows executing large neural networks with a modest amount of memory. Stateless and stateful layers may be present in any combination.

In an embodiment the event-based neural network processor comprises a message queue for queuing the event messages and the EOB-notification message from the current batch to the destination. The EOB-notification message succeeds the event messages in said message queue. Therewith it is guaranteed that the destination neural network layer has indeed received the last event message from the current batch, when it receives the EOB-notification. For completeness sake it is noted that an event-based neural network processor typically operates in a continuous manner, so that processing of that current batch will be performed in a periodic manner, and the last event message will be followed by further event messages in subsequent processing periods.

In an embodiment of the event-based neural network processor the neuron state data of respective neural network elements of the source neural network layer is made available in a frame-based manner. The emission condition for a current batch is complied with subject to compliance with the condition that each of the source batches associated with the current batch has submitted the EOB-notification message. The latter specified condition is sufficient in case the current neural network layer is the last layer. Compliance with the emission condition for a current batch can be evaluated by a logic operation, for example hardwired in the form of Boolean logic elements or performing verification by a suitably programmed general purpose processor.

In practice neural network elements of an event-based neural network processor may be organized logically in a substantial number of neural network layers, so that typically a current neural network layer also has a destination neural network layer. It is noted that the name "current neural network layer" is a relative indication. For example a current neural network layer may in turn be a source neural network layer for a subsequent neural network layer and it may be destination neural network layer from the perspective of its source neural network layer. A current batch of the current neural network layer is associated with respective one or more destination batches of the destination neural network layer in that one or more neural network elements comprised in the current batch are configured to transmit event messages to one or more neural network elements in each of said one or more destination batches of the destination neural network layer. In an embodiment, the destination neural network layer has a main storage space for storing neuron state data of respective neural network elements in the destination neural network layer and therewith defines one or more feature maps in the main storage space. In the embodiment the destination neural network layer further has a temporary storage space that has a storage capacity less than that of the main storage space.

In an example of that embodiment, compliance of the emission condition for a current batch is further subject to the condition that the destination neural network layer has allocated a subsection in a temporary storage space to each of the destination batches of the current batch. Therewith the destination neural network layer is ready to receive the event messages from the current batch directed to its destination batches. Compliance with both the condition related to source neural network layer and the just mentioned condition related to the destination neural network layer can be evaluated by a logic operation, for example hardwired in the form of Boolean logic elements. Alternatively a suitably programmed general purpose processor can perform this verification. It is not necessary that the destination neural network layer explicitly signals the allocations in its temporary storage space. In an alternative example the destination neural network layer signals to the current neural network layer that a predecessor destination batch to which a respective section of temporary storage space of the destination neural network layer is currently assigned no longer needs that section, so that it is free for use by the destination neural network layer to process event-messages received from the current batch directed to the destination batches associated with that current batch. In this connection it is noted that a predecessor destination batch of another destination batch is a destination batch which, due to the order of processing, starts receiving event messages before that another destination batch.

Typical embodiments of the event-based neural network processor comprise a plurality of data processor cores that each have proper computational and logic functionalities. For that purpose a data processor core may be provided with a suitably programmed general purpose processor, a suitably configured configurable processor, a special purpose processor or a combination thereof. Typically the plurality of data processor cores are coupled to a message exchange network, for exchange of messages, including the event-message from a current batch to its destination batches, control messages to signal EoB-notifications and other messages. In an embodiment, the event-based neural network processor comprises a first data processor core, a second data processor core and a third data processor core. The first data processor core is configured to perform data processing for a plurality of source batches associated with the current batch according to a predetermined order of said source batches. The second data processor core is configured to perform data processing for the current batch, and the third data processor core is configured to perform data processing for the destination batches associated with the current batch. Each core typically maintains open multiple batches of each of neural network layer processed therewith. I.e. it maintains the temporary neuron state of the neural elements in those batches in its temporary storage space. For example a core maintains the temporary neuron states of the current batches that are the destination of a source batch that is currently being processed for the source neural network. In addition it may maintain the state of a current batch that is currently emitting messages to a destination.

Operation of the event-based neural network processor can be highly efficient if the batches of a neural network layer are performed in a predetermined order. For example in the embodiment comprising the first, the second and the third data processor core referred to above, it is sufficient that the first data processor core is configured to submit an EOB notification message to the second data processor core only for the one of said associated source batches that is the last in said order of execution, and the second data processor core is configured to submit an EOB notification only to the first associated co-mapped successor batche.

In an embodiment the event-based neural network processor comprises an emission trigger module to enable emission of specific batches. In that case scheduling of the processing operations in a current neural network layer is not necessarily dependent on control messages from the source neural network layer and/or from the destination neural network layer, but its operation, and that of other neural network layers is controlled by control signals from the emission trigger module. In an alternative embodiment operation of some of the neural network layers is controlled by the emission trigger module operation of other neural network layers is controlled by control messages from source and/or destination neural network layers. In again further alternative embodiments operation of one or more neural network layers is controlled by a combination of control signals from the emission trigger module and control messages from source and/or destination neural network layers.

Even if the layers of an event-based neural network processor itself perform their operations in a predetermined order of the constituent batches, it may be the case that input data to be processed by the system is received in non-predetermined arbitrary order. This is for example the case, if input originates from an event-based sensor array. In an embodiment the event-based neural network processor comprises a message buffer configured for receiving in a non-predetermined arbitrary order event messages for respective neural network elements organized logically in the source neural network layer and the message buffer is configured to reorder the received event messages in that it cyclically forwards the received event messages to the neural network layer for respective mutually subsequent source batches in respective mutually subsequent update stages in each cycle. In that way the event-based neural network processor is capable to process the input data even if this data is received in a non-predetermined arbitrary order.

### BRIEF DESCRIPTION OF THE DRAWINGS

These and other aspects are described in more detail with reference to the drawings. Therein:
FIG. 1 schematically shows an embodiment of the improved event-based neural network processor;
FIG. 2 illustrates aspects of the embodiment of FIG. 1 in more detail;
FIG. 3 schematically shows another embodiment of the improved event-based neural network processor;
FIG. 4 shows an embodiment of an event-based neural network system comprising an embodiment of the improved event-based neural network processor and an event-based data source;
FIG. 5 shows an embodiment of the improved event-based neural network method.

### DETAILED DESCRIPTION OF EMBODIMENTS

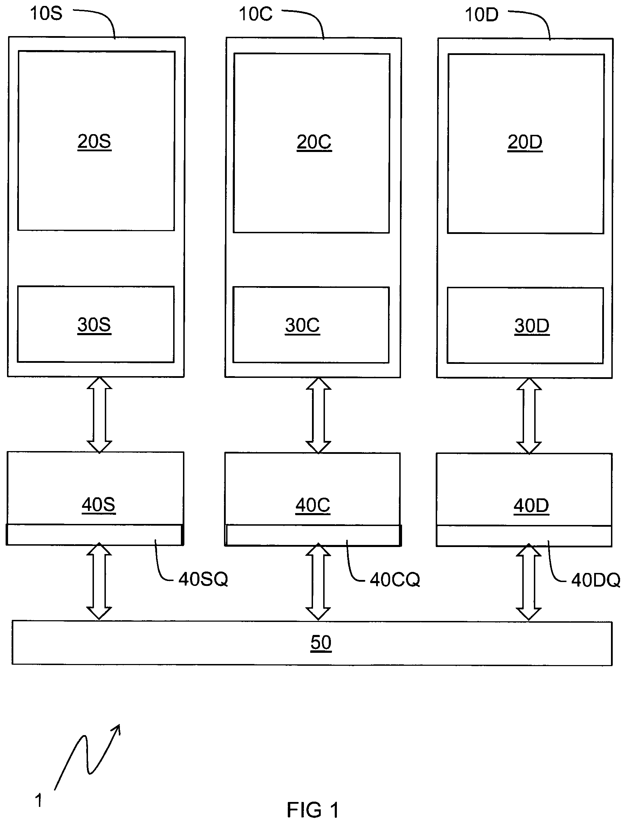

FIG. 1 schematically shows an event-based neural network processor 1 that is configured to execute a neural network logically organized in neural network layers that which comprise in addition to a source neural network layer 10S and a current neural network layer 10C, also a destination neural network layer 10D. Practical embodiments of the event-based neural network processor 1 may be configured to execute a neural network having a number of neural network layers that is substantially larger. However, for the purpose of explaining the principles of the present invention it is now presumed that the neural network executed by the processor is organized in exactly three layers.

In this embodiment, each neural network layer is allocated a respective main storage space 20S, 20C, 20D for storing neuron state data of respective neural network elements. The entirety of neuron state data therewith defines a respective feature map in the respective main storage space.

Each neural network layer 10S, 10C, 10D further has available a proper temporary storage space 30S, 30C, 30D with a storage capacity less than that of its main storage space. For example, the temporary storage space 30S of the source neural network layer 10S has a storage capacity less than that of the main storage space 20S. The temporary storage space is configured to be dynamically assigned to two or more, but not all batches of neural network elements of its corresponding neural network layer. In the following, the wording "source batch", "current batch", and "destination batch" is used to determine a batch of neural network elements organized logically in the source neural network layer, the current neural network layer and the destination neural network layer respectively. Neural network layers in the embodiment of FIG. 1, which are allocated a main storage space for storing all neuron state data of their layer are denoted as stateful. In other embodiments, one, more or all of the neural network layers only have a temporary storage space for dynamic allocation to selected batches. The capacity of the temporary storage space allows simultaneous storage of a number of batches that is greater than one, but less than the plurality of batches of a layer. Neural network layers that only have a temporary storage space are denoted as "stateless".

A current batch is associated with respective one or more source batches, in that one or more neural network elements of the current batch are configured to receive messages from one or more neural network elements in each of said one or more source batches.

In the embodiment shown, a current batch is also associated with respective one or more destination batches in that one or more neural network elements in the current batch are configured to transmit event messages to one or more neural network elements in each of said one or more destination batches.

The event-based neural network processor 1 is configured to dynamically assign the temporary storage space reserved for each neural network layer to two or more batches of neural network elements in each neural network layer.

In the example of FIG. 1, a proper processor core, denoted as 40S, 40C, 40D is provided for performing computational and logic operations associated with each of the neural network layers 10S, 10C, 10D. As noted above, it is not is not necessary that neural network layer is associated with a proper processor core. The neural network layers specify the logical configuration of the neural network elements in terms of their mutual interconnections, but do not impose a physical implementation. Dependent on the computational and storage requirements of the neural network elements organized logically in a neural network layer, it may share the facilities of a processor core with other neural network layers or may need to be implemented by a plurality of processor cores.

In operation, the event-based neural network processor 1 performs the following operations for each current batch of neural network elements in the current neural network layer 10C.

The event-based neural network processor 1 allocates a section in temporary storage space 30C to the current batch, which is to be used for storage of intermediate state data.

The intermediate state data of the current batch initially is a copy of the state data of the current section stored in the main storage space 20C.

The event-based neural network processor 1 then receives event message from the source batches of the source neural network layer 10S that are associated with the current batch and computes updated neuron state data of respective neural network elements in the current batch in response to the received event messages.

Therewith it stores the updated neuron state data in the allocated section in the temporary storage space 30C of the current neural network layer 10C. Typically, in response to an event message, the intermediate neuron state data is updated by increasing a state value SVj of a receiving neural network element j with the product of a value MVj contained in the event message and a weight value Wij assigned by the receiving neural network element to messages from the neural network element i from which it receives the message. I.e. SVi ← SVi + Wij*MVj

The event-based neural network processor 1 also determines whether an emission condition for the current batch is fulfilled. If the emission condition for the current batch is fulfilled, it evaluates an activation function for the neural network elements in the current batch and for those neural network elements having a non-zero activation function result, it transmits a respective event message to the neural network elements that are associated with the neural network elements in the associated respective one or more destination batches.

The activation function is for example a threshold function, such that its value is 0 if the state value SVj for a neural network element in the temporary storage space is less than or equal to a predetermined threshold value, and is non-zero if it exceeds the threshold value.

Subsequent to the transmission of an event-message it resets the neuron state of the neural network element having the non-zero activation function result.

Finally, the event-based neural network processor 1 writes the updated or reset neuron state data into the section of main storage space 20C of the current batch. It is noted that it is not necessary that all state data of a batch is duplicated in the temporary storage space and reversely. For example neuron state data of a neural network element may be copied into the temporary storage space only when an event message is received for that neural network element for the first time and the copied state data can then be updated in response to the event message. Alternatively, the updated state value can be stored in the temporary storage space, after it is computed based on the original state data stored in the main storage space and the first event-message addressing that neural network element. Only for those neural network elements to which event messages were addressed is it necessary to write updated state data from the temporary storage space into the main storage space.

The event-based neural network processor 1 then releases the section in temporary storage space 30C that was dynamically allocated to the current batch and transmits an end of batch (EOB) notification message to each associated destination batch.

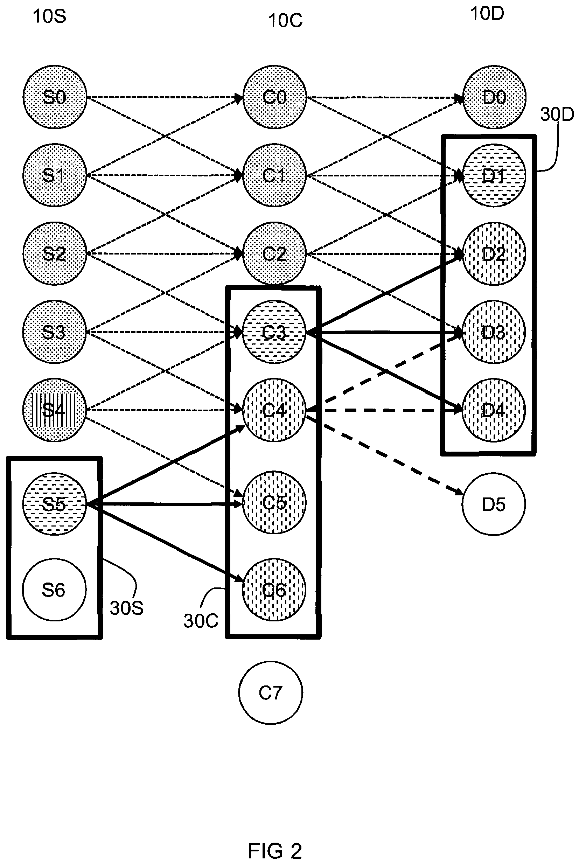

FIG. 2 shows in more detail an example wherein the event-based neural network processor 1 is configured to execute a neural network logically organized in a source neural network layer 10S, a current neural network layer 10C, and a destination neural network layer 10D. By way of example, source batches S0, ...,S6 of the source neural network layer 10S, current batches C0, ...,C6 of the current neural network layer 10C, and destination batches D0, ...,D6 of the destination neural network layer 10D are shown. In practice the system layers may be partitioned into a smaller or a larger number of batches. The rectangles 30S, 30C, 30D indicate the allocation of temporary storage space to batches at a point in time. At the point in time shown, it has been determined that the emission condition for the current batch C3 is fulfilled, and the event-based neural network processor 1 evaluates an activation function for the neural network elements of that current batch C3. For those neural network elements in the current batch C3 having a non-zero activation function result, it transmits a respective event message to the neural network elements that are associated with the neural network elements in the associated respective one or more destination batches D2, D3, D4. Subsequent to the transmission of an event-message it resets the neuron state of the neural network element having the non-zero activation function result.

Finally, the event-based neural network processor 1 writes the updated or reset neuron state data from the section in the temporary storage space 30C allocated to the current batch C3 into the section of main storage space 20C where it stores the neuron state data of the current batch C3. The section in the temporary storage space 30C allocated to the current batch C3 can then be released and allocated to a next current batch, in this example current batch C7. When all current batches have been updated and evaluated, a next operational cycle starts. Therein a section in temporary storage space is allocated to the current C0, the processes of receiving event-messages, updating, and transmitting event-messages will be performed for C0 etc.

It can be seen, that at the point in time shown in the example of FIG. 2, also respective sections of the temporary storage space 30C are allocated to current batches C4, C5, C6. As indicated by the solid arrows the event-based neural network processor 1 receives event messages from a source batch S5 that is associated with the current batches C4, C5, C6. The current batch C4 has already received event messages from its other source batches S3 and S4, which is confirmed by an end of batch signal (EoB). The current batch C5 has already received event messages from its other source batch S4 and will at a subsequent point in time receive event messages from its other source batch S6. The current batch C6 will at subsequent points in time receive event messages from its other source batches S6 etc. The process of emitting performed for current batch C3 and the process of receiving for the current batches C4, C5 and C6 may be performed in parallel. As an example the current neural network layer 10C is provided in a processor core having a dedicated processor module for performing the process of receiving and an other dedicated processor module for performing the process of transmitting. In another example the processor core has a single processor module for performing the process of receiving and the process of transmitting.

In the example of FIG. 2, the destination batches D2, D3, D4 are associated with current batch C4. Destination batch D1 is a predecessor of D2, as the operations for D1 are performed before the operations for D2. Furthermore, in the example shown, D1 is a co-mapped predecessor of destination batches D2, D3 and D4, in that destination batches D1 - D4 share the temporary storage space 30D in a same time-frame.

In the example of FIG. 2 it is shown, that the emission condition for current batch C4 is not yet fulfilled in that it may still expect event-messages from the source batch S5. A necessary sub-condition is that C4 has received an end of batch (EoB) signal from source batch S5. Another reason why the emission condition for current batch C4 is not yet fulfilled in this example is that its destination batch D5 is not yet capable to receive event messages. A necessary sub-condition is that a section of temporary storage 30D is allocated to destination batch D5. Temporary storage 30D is allocated to destination batch D5 once it is no longer in use by destination batch D1 in the process of emitting. The emission condition for the current batch C4 is fulfilled when both necessary sub-conditions are fulfilled. In other examples, wherein it is not necessary to perform an evaluation of an activation function for the destination neural network layer it is sufficient that the first sub-condition is fulfilled.

In an embodiment the event messages originating from a current batch and transmitted to a destination batch are submitted via a message queue and that same message queue is used for transmitting the EoB-notification once evaluation for a current batch is completed. For example once emission of current batch C3 is completed, an EoB notification is submitted via the message input queue of destination batches D2, D3 and D4, indicating the completion of emission of current batch C3. More exactly, a current batch issues the EoB notification if an event-message was submitted for each neural processing system element in the current batch for which the activation was determined non-zero.

As noted above, operation of the event-based neural network processor 1 typically proceeds in a cyclic manner. In each cycle a neural network layer performs the processing operations for subsequent batches of neural network elements. The neuron state data in the source neural network layer 10S may for example originate from a data source, such as a video camera that periodically refreshes the neuron state data in a frame-based manner.

In the exemplary event-based neural network processor of FIG. 1, the first data processor core 40S is configured to perform data processing for the source neural network layer 10S, the second data processor core 40C is configured to perform data processing for the current neural network layer 10C and the third data processor core 40D is configured to perform data processing for the destination neural network layer 10D. Each of the data processor cores 40S, 40C, 40D performs the data processing tasks for the batches of a layer in cyclic manner. This facilitates mutual synchronization of the data processor cores 40S, 40C, 40D. It is sufficient that the second data processor core 40C receives from the first data processor core 40S for a current batch only the EoB notification of the last one (in processing order) of the source batches associated with that current batch. For example for the current batch C3 in FIG. 2, it suffices to receive the EoB notification of source batch S4. This indicates to the second data processor core 40C, that no further event-messages are to be expected for the current batch C3 in the current operational cycle. Also, it is sufficient that the second data processor core 40C is configured to submit an EOB notification of a current batch only to the first associated successor batch. For example, once emission has been completed for current batch C3, it suffices that the second data processor core 40C submits the EoB-notification to the destination batch D2. This indicates to the third data processor core 40D, that no further event-messages are to be expected for the destination batch D2 in the current operational cycle.

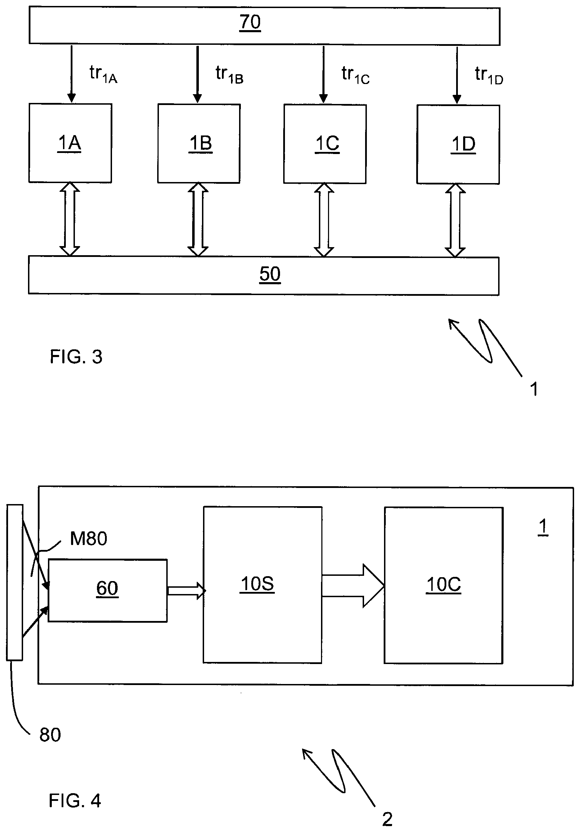

In some examples, the event-based neural network processor 1 operates in a synchronous manner, such that subsequent batches are processed according to a predetermined timed schedule wherein the emission condition for each batch is provided at a predetermined point in time in said schedule. An example thereof is shown in FIG. 3. The event-based neural network processor 1 therein is provided with an emission trigger module 70 to enable emission of specific batches. In the example shown the event-based neural network processor 1 comprises a plurality of neural network processor units 1A,...,1D that are coupled to a message exchange network 50 for exchange of event-messages. In an example each neural network processor unit 1A,...,1D is configured as a neural network layer. For example the first neural network processor unit 1A is configured as the source neural network layer 10S shown in FIG. 1 and comprises a main storage space 20S and a temporary storage space 30S as well as a data processor core 40S. Likewise the second neural network processor unit 1B in this example is configured as the current neural network layer 10C shown in FIG. 1 and comprises a main storage space 20C and a temporary storage space 30C as well as a data processor core 40C. Further, the third neural network processor unit 1C in this example is configured as the destination neural network layer 10C shown in FIG. 1 and comprises a main storage space 20D and a temporary storage space 30D as well as a data processor core 40D. The fourth neural network processor unit 1D may be implemented as a fourth neural network layer in an analogous manner.

In the example shown in FIG. 3, the emission trigger module 70 enables emission of a specific source batches with a batch trigger signal tr_{1A}. In the example shown, the batch trigger signal tr_{1A} is a periodic signal. During each period of the signal it indicates the source batches in the sequence in which they are enabled to emit. In response to the batch trigger signal tr_{1A} the data processor core 1A evaluates an activation function for each neural network element of the indicated source batch and subject to a computed value of the activation function it issues an event message to a destination of that neural network element. In the example shown in FIG. 2, the batch trigger signal tr_{1A} would periodically indicate the sequence of batches S0, S1, .... Likewise the batch trigger signal tr_{1B} would periodically indicate the sequence of batches C0, C1, ...., and the batch trigger signal tr_{1C} would periodically indicate the sequence of batches D0, D1, ...., and so on. The emission trigger module 70 maintains a schedule wherein the batch trigger signals tr_{1B} - tr_{1D} are synchronized taking into account the processing time involved for message receiving and emitting. In response to the batch trigger signal, the neural network processor units 1A,...,1D can also synchronize further control actions. For example, once the neural network processor unit has finished the message emission stage of a triggered batch, it can release the section in temporary storage allocated to that batch and allocate the release section to another batch so that it is capable to receive event messages. Referring to FIG. 2, it is for example the case that the neural network processor unit 1B has just received a batch trigger signal tr_{1B} that indicates that current batch C3 is enabled to emit. Once the neural network processor unit 1B has completed the emission of current batch C3 it can autonomously release the section of temporary storage space 30C allocated by the current batch C3, and instead allocate the released section to the current batch C7, so that it is ready to update the current batch C7 in response to event messages from source batch S6.

In some embodiments a neural network processor unit 1A,...,1D is configured to enable emission of a specific batch subject to a batch trigger signal tr_{1A}, ..., tr_{1D} from the emission trigger module 70 in combination with an additional emission condition signal, e.g. an EoB signal from a preceding layer or subsequent layer.

FIG. 4 schematically shows an image processing system 2 that comprises an event-based sensor array 80, and an event-based neural network processor 1 coupled thereto via a message buffer 60.

The event-based sensor array 80 is configured to issue event-messages M80 in a non-predetermined arbitrary order, dependent on changes in image content sensed by the event-based sensor array 80. The event messages issued by the event-based sensor array 80 indicate a type of change observed and the location where it was observed. The issued event messages may further specify a time stamp indicative for the point in time of the observation. The message buffer 60 receives these event-messages and is configured to reorder the received messages. I.e. in operation it periodically forwards the buffered event-messages to the source neural network layer 10S in an ordered manner. In each period it forwards the event-messages in a sequence of stages. In the first stage it forwards the event-messages received for the first source batch since the previous period, in the second stage it forwards the event-messages received for the second source batch since the previous period and so on until all source batches are addressed. Subsequent to each update stage for a source batch the message buffer 60 issues an EoB-notification to indicate that no additional event messages will follow for that source batch in the current update cycle. In this manner, the source neural network layer 10S receives the image related event messages from the event-based sensor array 80 according to a predetermined schedule, so that also the subsequent layers can operate in accordance with the schedule as described with reference to FIG. 2.

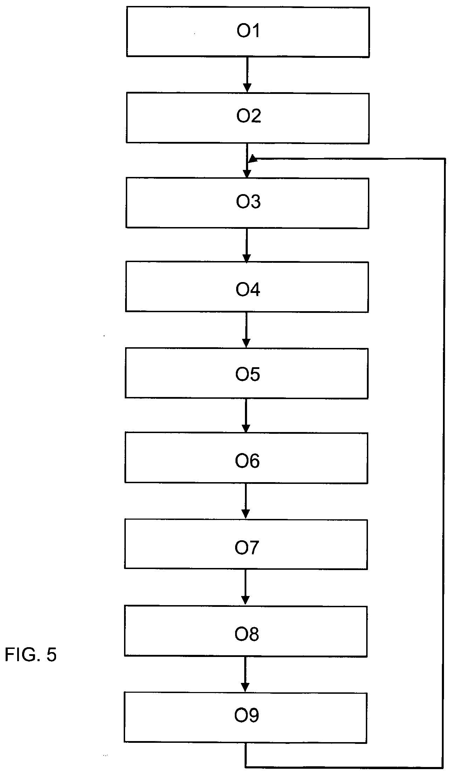

FIG. 5 schematically shows an event-based neural network processing method. The method comprises an operation O1 of logically organizing a neural network with neural network elements in neural network layers. Neural network elements are logically organized in this operation O1, in that it is specified for each neural network element which are its source neural network elements and which are its destination neural network elements. A source neural network element of a particular neural network element is a neural network element from which the particular neural network element is configured to receive messages. A destination neural network element of a particular neural network elements is a neural network element that is configured to receive messages from the particular neural network element. A source neural network element can be its own destination neural network element. The logical organization of the neural network can be configured in the neural network processor as connectivity tables.

The neural network elements are logically organized in neural network layers including at least a source neural network layer and a current neural network layer. A neural network layer can be considered as a cluster of neural network elements in that neural network elements in the current neural network layer have in common that their source neural network elements are in the source neural network layer. More particularly, the source neural network layer is organized in a plurality of source batches. Each source batch is a respective subset of neural network elements in the source neural network layer. Analogously, the current neural network layer is organized in a plurality of current batches and each current batch is a respective subset of neural network elements in the current neural network layer. A current batch of the current neural network layer is associated with respective one or more source batches of the source neural network layer in that one or more neural network elements of the current batch are configured to receive messages from one or more neural network elements in each of the one or more source batches of the source neural network layer. In one example, the neural network layers are conceptually organized as an NxM-dimensional matrix of neural network elements wherein the value N indicates a spatial arrangement, for example a two- or three-dimensional arrangement and the value M indicates a number of features in a feature vector. For example in a 2xM arrangement the neural network elements are organized in a two-dimensional space, providing for each position in that space a feature vector. In that example a current batch of a current neural network layer can be a subset of neural network elements logically organized along a line in the current neural network layer. Likewise a source batch in a source neural network layer can be a subset of neural network elements logically organized along a line in the source neural network layer. If for example, the operation performed by the neural network elements in the current neural network layer is an spatial convolution operation, each neural network element in a current batch is associated with neural network elements of a number of batches in the source neural network layer, wherein the number depends on the width of the convolution window.

In the operation O2, a temporary storage space is provided that is to be dynamically allocated to a number of current batches. The number is greater than one and less than the plurality of current batches in the current neural network layer. For example the current layer and the source layer respectively have Lc and Ls lines, and each line corresponds to a respective current batch and source batch respectively. In case the operation to performed by the current neural network layer is a 3x3 convolution, each current batch is associated with three source batches. Reversely, a source batch corresponds to three current batches. In that case, the temporary storage space of the current neural network layer at least needs to have a capacity to store the temporary state of three current batches. In an variation, the temporary storage space of the current neural network layer has a capacity to store the temporary state of the number of current batches corresponding to a single source batch and to store one additional current batch. Therewith it is possible that simultaneously operations are performed for the number of current batches corresponding to a single source batch as well as subsequent operations are performed for the additional current batch.

Subsequent to these configuration operations 01, O2, the neural network is actually executed with the following operations O3 to O9. These operations are performed for all current batches in the current neural network layer. The process of performing the operations for all current batches in the current neural network layer can be repeated an arbitrary number of times.

In operation O3, a section in temporary storage space 30C is allocated to said each current batch. In the example of FIG. 2, a section in temporary storage space 30C is allocated to the current batch C3.

In operation O4 event messages are received from the one or more associated source batches of the current batch for which a section in temporary storage space 30C was allocated. In the example of FIG. 2, the current batch C3 receives event-messages from its associated source batches S2, S3, S4.

In operation O5, the section in temporary storage space 30C allocated in operation O3 is used when updating neuron state data of respective neural network elements in the current batch, e.g. C3 in response to the received event messages received in operation O4.

In operation O6, subject to compliance with an emission condition for said each batch, an activation function is evaluated for each neural network element in said each current batch and subject to a value of the activation function a respective event message is issued in operation O7 to a destination of that neural network element. In the example of FIG. 2, it is necessary for fulfilling of the emission condition for current batch C3 is complied with if it has received an EoB message from each of its associated source batches S2, S3, S4. Moreover, in the embodiment of FIG. 2 it is necessary that the destination neural network layer 10D is ready to receive the event-messages from C3. That is, respective sections of the temporary storage space 30D need to be assigned to the associated destination batches D2, D3, D4. This may be signaled directly, but may alternatively signaled indirectly, e.g. an EoB message of D0 indicates that it no longer needs a section in temporary storage space 30D, so that it becomes available to D4. Therewith all associated destination batches D2, D3, D4 have a respective section in temporary storage space 30D. This alternative way of signaling is advantageous in that an EoB signal that is used as control input for a next layer also serves as control input for a preceeding layer.

Once the emission condition has been fulfilled and emission of the event messages of the current batch has been completed, the method proceeds with operation O8, wherein the section of temporary storage space 30C that was dynamically allocated to said each current batch is released, so that it becomes available for a next current batch. Once the section for C3 is released, it becomes available to batch C7. The dynamic allocation of sections of temporary storage space can be imagined as if the allocated section for a batch shifts into the temporary storage space at one end of its address range and shifts outside the temporary storage space at the opposite end of its address range. In practice a batch keeps the same allocated section in the time interval between operation O3 and operation O8. The section that is deallocated in operation O8 is then allocated in operation O3 to the next batch.

In operation O9 an end of batch (EOB) notification message is issued to the destination, to confirm that no further event-messages will be issued by the current batch. As noted above, this EoB message may also serve as input to the source neural network layer that C7 is ready to receive event messages from S6.

As indicated by the backwards directed arrow, the method continues so that the same processing operations O3-O9 are performed for the other current batches C4, C5...Furthermore, when these processing operations have been performed for all batches, the same processing operations O3-O9 may be repeated all over again for all batches as a continuous neural network process. Although it is suggested by the flow chart that the processing operations are performed fully sequentially, operations may be performed partly in parallel. For example while emission takes place for batch C3 in operations O6 and O7, the batches C4-C6 may receive and process event-messages in operations O4 and O5.

Various options are available to implement an event-based neural network in the event-based neural network processor 1. For example, the event-based neural network processor may have a physical architecture that is the same as the logic architecture of the neural network implemented therewith, but that is not necessary. As a first example, it may be contemplated to implement each logical element as a respective physical element such as in a biological neural network. This would imply that each neural network element not only has dedicated storage space, but also has proper computation and logic functionality, enabling it to autonomously perform all logic and computational operations. Also this would imply that dedicated messaging pathways are provided to receive event-messages from each associated neural network processor element of the source neural network layer and to transmit event-messages to each associated neural network processor element of the destination neural network layer. This would require a huge amount of computational and other resources, so that in practice groups of neural network elements share respective logic and computational resources. Also message exchange facilities are shared. In one example, the event-based neural network processor 1 comprises a plurality of neural network processor units, that each comprise a respective data processor core and data storage facility. Each neural network processor unit may be configured as a respective neural network layer, but that is not necessary. In some cases a neural network processor unit may be configured as a plurality of neural network layers. In other cases a plurality of neural network processor units may together be configured as a large neural network layer. Important is that respective storage space elements are available for respective neural network elements. This is achieved, in that neural network element has a respective storage location in a main storage space.

In some examples computational and logic resources are implemented as dedicated hardware that is optimized to the computational and logic tasks to be performed. For example a dedicated computational unit is provided to update a neuron state of a neural network element upon receipt of an event message. As another example a dedicated computational unit is provided to evaluate the activation function for a neural network element and again another unit is configured to generate an event message subject the result of that evaluation.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

## Claims

1. An event-based neural network processor (1):
comprising neural network processor facilities including data processing facilities, data storage facilities and message exchange facilities;
being configured to execute a neural network with neural network elements logically organized in neural network layers, the neural network layers including at least:
a source neural network layer comprising a plurality of source batches, each source batch being a respective subset of neural network elements in the source neural network layer, and
a current neural network layer comprising a plurality of current batches, each current batch being a respective subset of neural network elements in the current neural network layer;
a current batch of the current neural network layer (10C) being associated with respective one or more source batches of the source neural network layer (10S) in that one or more neural network elements of the current batch are configured to receive messages from one or more neural network elements in each of said one or more source batches of the source neural network layer;
wherein the event-based neural network processor (1) at least has a temporary storage space (30C), to be dynamically allocated to a number of current batches, which number is greater than one and less than the plurality of current batches in the current neural network layer;
the event-based neural network processor being configured to perform the following operations for each current batch;
- temporarily allocating a section in the temporary storage space (30C) to said each current batch;
- receiving event messages from the one or more associated source batches addressing said each current batch;
- using the section in temporary storage space (30C) when updating neuron state data of respective neural network elements in said each current batch in response to the received event messages;
- subject to compliance with an emission condition for said each current batch, evaluating an activation function for each neural network element in said each current batch and subject to a value of the activation function issuing a respective event message to a destination;
- releasing the section in temporary storage space (30C) that was temporarily allocated to said each current batch;
- issuing an end of batch (EOB) notification message to the destination.

2. The event-based neural network processor according to claim 1, comprising a message queue (40SQ, 40CQ, 40DQ) for queuing the event messages and the EOB-notification message from the current batch to the destination and wherein the EOB-notification message succeeds the event messages in said message queue.

3. The event-based neural network processor according to claim 1 or 2, wherein the neuron state data of respective neural network elements of the source neural network layer is made available in a frame-based manner, and wherein the emission condition for a current batch is complied with subject to compliance with the condition that each of the source batches associated with the current batch has submitted the EOB-notification message.

4. The event-based neural network processor (1) according to one of the preceding claims, being configured to execute the neural network having in addition neural network elements logically organized in a destination neural network layer comprising a plurality of destination batches, each destination batch being a respective subset of neural network elements in the destination neural network layer; further comprising:
- a further temporary storage space (30D) to be dynamically allocated to a number of destination batches, which number is greater than one and less than the plurality of destination batches in the destination neural network layer,
- wherein a current batch of the current neural network layer (10C) is associated with respective one or more destination batches of the destination neural network layer (10D) in that one or more neural network elements in the current batch are configured to transmit event messages to one or more neural network elements in each of said one or more destination batches of the destination neural network layer (10D).

5. The event-based neural network processor (1) according to claim 4, wherein compliance of the emission condition for a current batch is subject to the condition that a respective section in the further temporary storage space (30D) is allocated to each of the destination batches of the current batch.

6. The event-based neural network processor (1) according to claim 5, wherein the destination neural network layer is configured to signal to the current neural network layer that a predecessor destination batch to which a respective section of the further temporary storage space (30D) is currently assigned no longer needs that section, so that it is free for use by the destination neural network layer to process event-messages received from the current batch directed to the destination batches associated with that current batch, a predecessor destination batch of another destination batch being a destination batch which, due to the order of processing, starts receiving event messages before that another destination batch.

7. The event-based neural network processor (1) according to either of the preceding claims, comprising a first data processor core (40S), a second data processor core (40C) and a third data processor core (40D), wherein the first data processor core (40S) is configured to perform data processing for a plurality of source batches associated with the current batch according to a predetermined order of said source batches, wherein the second data processor core (40C) is configured to perform data processing for the current batch, and the third data processor core (40D) is configured to perform data processing for the destination batches associated with the current batch, the first data processor core (40S) being configured to submit an EOB notification message to the second data processor core (40C) only for the one of said associated source batches that is the last in said order of execution, and the second data processor core (40C) being configured to submit an EOB notification only to the first associated co-mapped successor batch.

8. The event-based neural network processor (1) according to either of the preceding claims, comprising an emission trigger module (70) to enable emission of specific batches.

9. The event-based neural network processor (1) according to claim 8, comprising neural network processor units (1A,...,1D) that are configured to enable emission of a specific batch subject to a batch trigger signal (tr_{1A}, ..., tr_{1D}) from the emission trigger module (70) in combination with an additional emission condition signal.

10. The event-based neural network processor (1) according to either of the preceding claims, comprising a message buffer (60) configured for receiving in a non-predetermined arbitrary order event messages (M80) for respective neural network elements organized logically in the source neural network layer (10S) and being configured to reorder the received event messages in that it cyclically forwards the received event messages to the source neural network layer (10S) for respective mutually subsequent source batches in respective mutually subsequent update stages in each cycle.

11. The event-based neural network processor (1) according to claim 10, comprising an event-based sensor array (80), wherein the message buffer (60) is configured for receiving the event messages (M80) from the event-based sensor array (80).

12. An event-based neural network processing method, comprising:
- logically organizing (O1) a neural network with neural network elements in neural network layers including at least a source neural network layer comprising a plurality of source batches, each source batch being a respective subset of neural network elements in the source neural network layer, and a current neural network layer comprising a plurality of current batches, each current batch being a respective subset of neural network elements in the current neural network layer, wherein a current batch of the current neural network layer is associated with respective one or more source batches of the source neural network layer in that one or more neural network elements of the current batch are configured to receive messages from one or more neural network elements in each of said one or more source batches of the source neural network layer;
- providing (O2) a temporary storage space (30C) to be dynamically allocated to a number of current batches, which number is greater than one and less than the plurality of current batches in the current neural network layer;
- for each current batch of the current neural network layer performing the following operations:
- temporarily allocating (O3) a section in the first temporary storage space (30C) to said each current batch;
- receiving (O4) event messages from the one or more associated source batches of said each current batch;
- using (O5) the section in the temporary storage space (30C) when updating neuron state data of respective neural network elements in said each current batch in response to the received event messages;
- subject to compliance with an emission condition for said each current batch, evaluating (O6) an activation function for each neural network element in said each current batch and subject to a value of the activation function issuing (O7) a respective event message to a destination;
- releasing (O8) the section in the temporary storage space (30C) that was temporarily allocated to said each current batch;
- issuing (O9) an end of batch (EOB) notification message to the destination.
